# EUROPÄISCHE PATENTSCHRIFT

(11) **EP 2 414 691 B1**
(45) Veröffentlichungstag und Bekanntmachung des Hinweises auf die Patenterteilung: **01.06.2016**
(21) Anmeldenummer: 10714162.4
(22) Anmeldetag: 03.03.2010
(51) Int. Cl.: F16C 19/24

(54) **WÄLZLAGER MIT SEGMENTIERTEM KÄFIG**
ROLLING BEARING WITH SEGMENTED CAGE
ROULEMENT AVEC CAGE SEGMENTÉE

(30) Priorität: 07.03.2009 DE 102009012241
(43) Veröffentlichungstag der Anmeldung: 08.02.2012
(73) Patentinhaber: Beuerlein, Werner, 97332 Volkach (DE)
(72) Erfinder: Beuerlein, Werner, 97332 Volkach (DE)
(74) Vertreter: Pöhner, Wilfried Anton
(86) Internationale Anmeldenummer: PCT/DE2010/000243
(87) Internationale Veröffentlichungsnummer: WO 2010/102603

(56) Entgegenhaltungen:
- WO-A2-2009/056310
- CH-A5- 612 479
- DE-A1-102006 045 436
- DE-A1-102008 034 922
- DE-A1-102009 004 657
- DE-C- 874 683
- DE-U1- 7 935 205
- DE-U1- 8 621 532
- FR-A1- 2 876 169
- GB-A- 1 296 976
- JP-A- 8 121 487
- JP-A- 2010 144 794
- US-A- 2 946 633

## Beschreibung

Die Erfindung bezieht sich auf ein Wälzlager mit segmentiertem Käfig zur Führung der Wälzkörper gemäß dem Oberbegriff des Anspruchs 1.

In einem Wälzlager rollen Wälzkörper wie Kugeln, zylindrische Rollen, Kegel, Nadeln oder tonnenförmige Toroide sowohl auf der Außenseite des Innenrings als auch auf der Innenseite des Außenrings ab, wodurch der Innen- und der Außenring gegeneinander drehbar sind. Bei gleichmäßiger, stationärer Belastung des Wälzlagers verteilt sich die Belastung etwa gleichmäßig auf alle Wälzkörper, so dass sie sowohl den Innen- als auch den Außenring berühren. Dann bleibt auch der gleichmäßige Abstand zwischen allen Wälzkörpern erhalten.

Durch stoßartige Belastungen und/oder ungleichmäßige Erwärmung kann sich die Last jedoch vorübergehend auf wenige Wälzkörper konzentrieren, so dass andere, derzeit wenig belastete Wälzkörper den Kontakt zu einem Ring verlieren und als Folge ihre Position innerhalb des Wälzlager verlieren und gegen einen anderen Wälzkörper stoßen können. Dann reiben sich beide Wälzkörper aneinander und können Schaden nehmen. Sobald sich daraus ein unrunder Lauf des Lagers ergibt, werden auch die übrigen Wälzkörper aus ihrer Position verschoben, stoßen aneinander und werden ebenfalls beschädigt. Dann muss das Lager ausgewechselt werden.

Um das zu vermeiden, sind Käfige bekannt, die unbelastete Wälzkörper in dem vorgesehenen Abstand zu ihren Nachbarn halten. Dazu müssen sie die Wälzkörper berühren. Je nach Ausführung stützen sich die Käfige auch auf dem Innenring oder dem Außenring ab.

In jedem Fall sind sie nicht nur Kräften ausgesetzt, die tangential gerichtet sind, sondern auch erheblichen Kräften in radialer Richtung. Daher müssen die Käfige auch entsprechend stabil konstruiert werden.

Jeder Käfig bildet für jeden Wälzkörper eine sogenannte Tasche, in der er den Wälzkörper führt. Die Führung ist entweder nur locker, so dass sich der Wälzkörper noch innerhalb der Tasche etwas bewegen kann. Oder die Führung ist so fest, dass der Wälzkörper auch beim Herausnehmen des Käfigs aus dem Lager noch vom Käfig gehalten wird. In jedem Fall ist der Käfig stets ein komplexes Teil, das eine aufwendige Herstellung erfordert.

Um den Herstellungsaufwand zu reduzieren, sind aus aktuellem Stand der Technik verschiedene Vorschläge bekannt, den Käfig nicht einstückig, sondern in Teilen zu fertigen und die Teile zu einem vollständigen, in sich geschlossenen, ringförmigen Käfig zusammen zu setzen:
Die US 6,666,585 B1 stellt einen Käfig vor, der aus zwei ringförmigen Teilen zusammengesetzt ist. Der äußere Ring enthält Öffnungen, die auf der nach außen weisenden Seite der Wälzkörper aufliegen, der innere Ring weist gabelartige Fortsätze auf, die sich an die innere Seite der Wälzkörper anlegen. Beide Teile sind durch eine Rastverbindung zu einem vollständigen Käfig zusammengesetzt.

Zwar wird dadurch die Fertigung der einzelnen Teile etwas erleichtert, aber der Käfig muss in Gussformen hergestellt und auf Bearbeitungsmaschinen weiter bearbeitet und montiert werden, die den vollständigen Durchmesser des Käfigs aufnehmen können.

Um die Größe dieser Bestandteile drastisch zu reduzieren, schlägt die DE 840 175 C vor, dass jeder Wälzkörper von einem U-förmig gebogenen Blechprofil gehalten wird, das eine Öffnung aufweist, durch die ein Teil des Wälzkörpers hindurchragt. Benachbarte, U-förmige Blechprofile berühren sich jeweils mit ihren Schenkeln. Irgendeine feste Verbindung zwischen den U-förmigen Blechprofilen als Segmente eines Käfigs ist jedoch ausdrücklich nicht vorgesehen. Die Einhaltung des erforderlichen Abstandes zwischen den Wälzkörpern soll also ausschließlich durch die lockere Aneinanderreihung der U-förmigen Blechprofile erfolgen, die hier als Käfigsegment gedacht sind.

Diese Anordnung bietet den Vorteil, dass die U-förmigen Blechprofile nur durch leichtes Einwärtsbiegen oder Auswärtsbiegen ihrer Schenkel an Wälzlager mit verschiedenen Durchmessern angepasst werden können.

Ein gewichtiger Nachteil ist jedoch, dass sie nur in sehr beschränktem Maße die Kräfte aufnehmen können, die bei einer ungleichmäßigen Belastung der Wälzkörper entstehen können. Bei starken Laststößen kann dann die dringend erforderliche Stützwirkung des Käfigs fehlen und die Wälzkörper geraten aus ihrer korrekten Position heraus. Selbst wenn sich dabei nur die Blechprofile verbiegen, so reiben sie fortan an anderen Elementen und können das Lagerfett herausdrücken, wodurch das Wälzlager vorschnell ausfällt.

Deshalb hat der Anmelder des vorgenannten Schutzrechtes in der DE 874 683 C alle U-förmigen Käfigsegmente durch einen umlaufenden, soliden Stahlring miteinander verbunden, der in seitliche Schlitze in den beider Schenkeln eines jeden U-förmigen Käfigsegments eingesetzt ist.

Zwar ist der zuvor sehr labile Käfig dadurch sehr viel belastbarer gegenüber Kräften, die in radialer Richtung wirken, aber nachteiliger Weise ist mit dem Ring ein Bauteil erforderlich, das sorgfältig auf den Durchmesser des jeweiligen Lagers abzustimmen ist.

In CH 612 479 wird ein Wälzlagerkäfig vorgestellt, dessen Käfigsegmente mit dazwischen angeordneten, bajonettartigen Kupplungselementen verbunden werden.

In dem Dokument DE 86 21 532 U sowie den beiden gattungsbildenden Dokumenten JP H08 121 487 A und FR 2 876 169 A1 werden segmentierte Käfige vorgestellt, deren einzelne Käfigsegmente gelenkig nach Art eines Scharniers miteinander verbunden sind.

Auf diesem Hintergrund hat sich die Erfindung die Aufgabe gestellt, einen segmentierten Käfig für Wälzlager zu entwickeln, der aus mehreren Käfigsegmenten zur Aufnahme je eines Wälzkörpers besteht, die miteinander zu geschlossen Käfigen von verschiedenen Durchmessern zusammengesetzt werden können und bei denen die Drehmomente um die Längsachse der Käfigsegmente weitergegeben werden, ohne dass sich der Winkel zwischen benachbarten Käfigsegmenten wesentlich ändert.

Als Lösung dieser Aufgabe lehrt die Erfindung, ein Wälzlager mit den im Anspruch 1 angegebenen Merkmalen.

Das entscheidende Merkmal des erfindungsgemäßen Käfigsegmentes ist, dass eine relative Verschwenkbarkeit der Käfigsegmente dadurch unterbunden wird, dass jede Seitenplatte mit ihrer gesamtem Stirnfläche an der benachbarten Seitenplatte anliegt, d.h. die Stirnflächen benachbarter Seitenplatten liegen plan aneinander und stützen sich gegenseitig ab. Dies bedingt eine Blockade jeder Schwenkbewegung.

Ein Merkmal der Erfindung ist also, dass jedes Käfigsegment für je einen Wälzkörper eine eigene Tasche bereithält, wobei aus den beiden Stegen und den beiden Seitenflächen ein rahmenförmiges Element gebildet wird, welches den Wälzkörper umschließt.

Im Unterschied zum vorgestellten Stand der Technik ist der Rahmen für sich alleine bereits eine relativ stabile Baugruppe. Ebenfalls im Gegensatz zum genannten Stand der Technik wird diese Baugruppe fest und über relativ große Querschnittsflächen hinweg mit anderen gleichartigen Baugruppen verbunden und zu einem ringförmigen Käfig geschlossen. Durch die feste Ausbildung der rahmenartigen Käfigsegmente in sich sowie durch die feste Verbindung der Käfigsegmente untereinander, entsteht ein insgesamt sehr solider und tragfähiger Käfig, der auch bei Laststößen und Spitzenbelastungen alle Wälzkörper dauerhaft in ihrer Position halten kann.

Durch die tragfähige Verbindung zwischen den beiden Käfigelementen können radial wirkende Kräfte von einem Käfigsegment auf das benachbarte Käfigsegment und von dort auf weitere Käfigsegmente übertragen werden, sodass auch kurzzeitig vom Innenring oder vom Außenring des Wälzlagers abgehobene Wälzkörper in ihrem korrekten Abstand zum benachbarten Wälzkörper gehalten werden können.

Die Belastbarkeit der Verbindung der Käfigsegmente untereinander wird durch die erfindungstypische Auslegung der Seitenplatten erreicht, die als plattenförmiges Element in axialer Richtung des Käfigsegmentes erheblich dünner sind als in radialer Richtung. Weil die Stirnseiten jeder Seitenplatte sich durch das Ende jedes angrenzenden Stegs hindurch weiter fortsetzen, stützt sich die nächste daran anschließende Seitenplatte mit ihrer gesamten Stirnfläche darauf ab. Dadurch können Drehmomente um die Längsachse jedes Käfigsegmentes auf das benachbarte Käfigsegment weitergegeben werden, ohne das sich der Winkel zwischen den beiden Käfigsegmenten wesentlich ändert. So wird auch bei Laststößen eine sichere Führung der Wälzkörper erreicht.

Auch in allen Ausführungsvarianten sind die Seitenplatten an ihren Stirnseiten mit den Stirnseiten der Seitenplatten beider benachbarten Käfigsegmente tragfähig verbunden. Durch das Verbinden aller Käfigsegmente werden alle Seitenplatten zu einem ringartigen Polygon verbunden, das den Käfig im erforderlichen Maße stabilisiert.

Es ist zwar denkbar, dass die einzelnen Käfigsegmente aus Einzelteilen zusammengesetzt werden, z. B. durch verschweißte oder verklebte Stege und Seitenplatten. Die Erfindung bevorzugt es jedoch, die Käfigsegmente als einstückiges Spritzgussteil, Druckgussteil oder anderes Gussteil zu formen.

Besonders interessant ist es, die Käfigsegmente aus Polyamid oder Polyphtalamid oder Polyetherketon (PEK) oder Polyetheretherketon (PEEK) oder Polyamidimid (PAI) oder Polyimid (PI) oder Phenolharz herzustellen. Diese Kunststoffe sind für Wälzlagerkäfige bewährt und bieten den Vorteil einer besonders geringen Gleitreibung mit den Wälzkörpern. Im Vergleich zu Metall ist Kunststoff viel kostengünstigerer. Nach dem Guss muss er i.d.R. nicht mehr weiter bearbeitet werden. Ein Kunststoffkäfig ermöglicht eine höhere Laufruhe des Lagers und ist auch ohne Schmierung des Lagers noch für einen Notlauf geeignet.

Zur Erhöhung der mechanischen Festigkeit jedes Käfigsegmentes können dem Kunststoff Glasfasern und/oder andere Fasern und/oder Glaskugeln und/oder andere Füllstoffe beigemischt werden. Damit wird nicht nur die mechanische Widerstandskraft erheblich erhöht, sondern auch noch der Schwund beim Abkühlen des Kunststoffes reduziert. Insbesondere durch die Beimischung von Glaskugeln wird das Schwinden in beiden Richtungen des Kunststoffes etwa gleich verlaufen.

Alternativ können die Käfigsegmente auch aus Metall bestehen, wie z. B. aus Blech, das gestanzt und abgekantet wird. Möglich sind auch Messingteile, die aus Einzelteilen zu einem Käfigsegment zusammengesetzt werden. Oder das Käfigsegment ist ein einstückiges Messingteil. Ein bewährtes Material für Käfige und damit auch für Käfigsegmente ist auch Grauguss. Zu beachten ist, dass ein Käfigsegment aus Metall deutlich teurer ist als eines aus Kunststoff. Die Gleitreibung gegenüber den Wälzkörpern ist sehr viel schlechter als bei Kunststoff. Einziger Vorteil ist eine höhere mechanische Stabilität.

Die Gleiteigenschaften von metallenen Käfigsegmenten können in einer Variante durch Gleitlager aus Kunststoff verbessert werden, die auf denjenigen Flächen aufgesetzt werden, mit denen das Käfigsegment den Wälzkörper berührt. Eine solche Konstruktion erfordert jedoch einen nennenswerten Mehraufwand.

Ein wesentliches Merkmal des erfindungsgemäßen Käfigsegmentes ist die tragfähige und hoch belastbare Verbindung zu beiden benachbarten Käfigsegmenten. Als Verbindung bevorzugt die Erfindung, dass in die Außenseite des ersten Steges jedes Käfigsegmentes eine Nut eingeformt ist und an der Außenseite des zweiten Steges eine Feder angeformt ist, die zur Nut komplementär ist.

Das Profil der Nut und der Feder ist im allgemeinsten Fall beliebig. Eine sehr interessante Variante ist eine Schwalbenschwanzform für Nut und Feder. Diese Verbindung ermöglicht eine Pressung der beiden aufeinanderliegenden Außenflächen beider Stege und damit auch die Übertragung von Drehmomenten, die durch Radialkräfte auf den Käfig erzeugt werden und um die Längsachse des Käfigs wirksam sind.

Eine Alternative ist ein schlüssellochartiges Profil der Nut, in die ein dazu komplementäres, etwa kopfartiges Profil hinein geschoben wird. Viele andere Varianten mit einer Hinterschneidung sind denkbar.

Stets müssen bei dieser und bei anderen Varianten zur Montage die beiden miteinander zu verbindenden Segmente in axialer Richtung des Käfigs ineinander geschoben werden. Als Montageerleichterung kann eine Seite des Profils der Feder etwas angespitzt werden

Eine Alternative dazu ist eine Nut ohne Hinterschneidung bei der etwa in der Mitte eine Zunge angeformt ist, die in eine dazu komplementäre Einbuchtung in der Mitte der Feder einsteckbar ist. Sowohl durch die Zunge als auch durch beide Teile der Feder verläuft parallel zur Längsachse des Käfigs eine Bohrung, in die ein Sicherungsstift oder eine Verschraubung eingesteckt werden kann.

Es ist ein anderes wesentliches Merkmal der Erfindung, dass die Käfigsegmente zu Käfigen mit verschiedenen Durchmessern zusammensetzbar sind. Im einfachsten Fall wird für eine -geringe - Variation des Durchmessers die Elastizität der Käfigsegmente ausgenutzt, sodass z. B. statt neun Käfigsegmenten zehn Segmente zu einem Ring zusammengesetzt werden, dessen Durchmesser dann größer ist oder nur acht Segmente zu einem Käfig mit kleinerem Durchmesser miteinander verbunden. Durch die dabei auf die Verbindung ausgeübten Spannungen wird das Verbindungselement auch bei Spitzenbelastungen stets einem gewissen Druck unterliegen, sodass die Verbindungsflächen aneinandergepresst werden und damit die Stabilität des Käfigs erhöht wird.

Falls die Varianz des Durchmessers jedoch größer sein sollt, schlägt die Erfindung vor, dass zwischen die Stege benachbarter Käfigsegmente Zwischenkeile eingefügt werden, deren Verbindungsflächen zu den Stegen komplementär zu den Außenseiten der Käfigsegmente geformt sind. Wenn diese Zwischenkeile in mehreren Versionen mit verschiedenem Winkel zwischen ihren beiden Verbindungsflächen gefertigt werden, können sie durch Kombination von immer gleichen Käfigsegmenten mit Zwischenkeilen mit verschiedenen Winkeln Käfige von sehr kleinem oder sehr großem Durchmesser bilden. Dadurch werden die Kosten bei der Herstellung ebenso wie bei der Verwendung der Käfige stark reduziert, da die Anzahl der zu berücksichtigenden Teile dramatisch reduziert werden.

Jede Variante eines Käfigsegmentes enthält eine Tasche für einen Wälzkörper, der als Kugel, zylindrische Rolle, Kegel, Nadel oder tonnenförmiger Toroid geformt sein kann. Aber auch für jede andere rotationssymmetrische Form eines Wälzkörpers kann eine dazu partiell komplementäre Tasche im Käfigsegment geformt werden.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Schrägbild eines Ausschnittes von einem Käfig
- Figur 2: Schrägbild eines rahmenförmigen Käfigsegmentes

Die Figuren zeigen im Einzelnen.

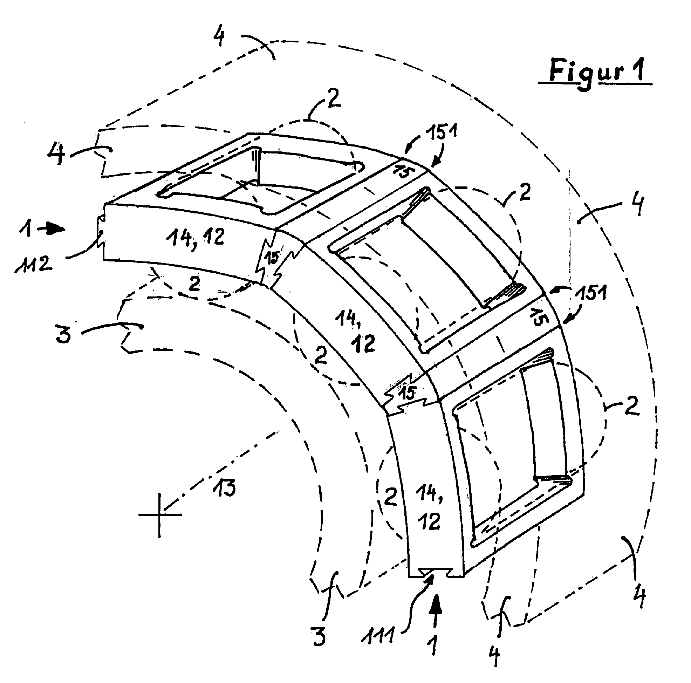

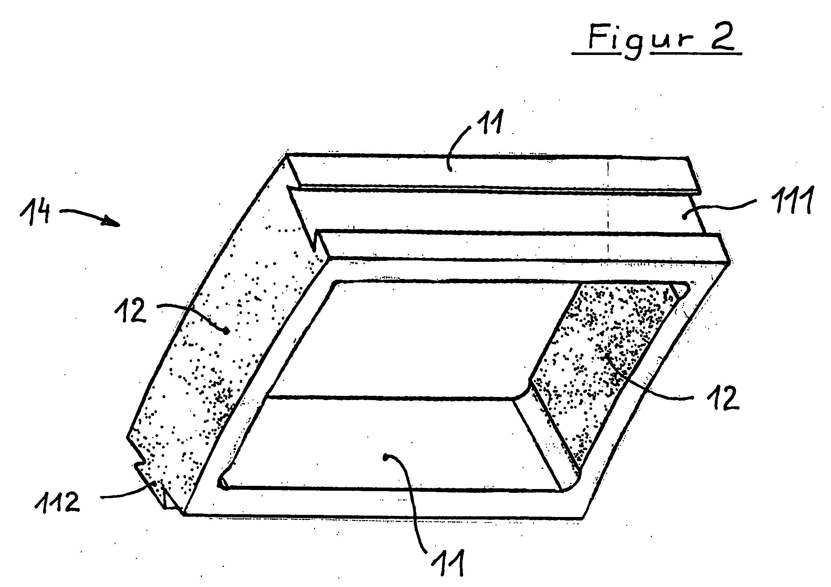

In Figur 1 ist als Ausschnitt etwa ein Viertelkreis eines Käfigs (1) gezeichnet, der aus drei Stück Käfigsegmenten (14) besteht, die jeweils über Zwischenkeile (15) miteinander verbunden sind. Jedes Käfigsegment (14) führt einen - hier gestrichelt gezeichneten - Wälzkörper (2). Jeder Wälzkörper (2) rollt sich auf dem - ebenfalls gestrichelt gezeichneten - Innenring (3) und dem Außenring (4) ab. In Figur 2 ist sehr gut zu erkennen, wie solide die Verbindung der Käfigsegmente (14) und der Zwischenkeile (15) dank der plattenförmigen Dimensionierung der Seitenplatten (12) jedes Käfigsegmentes ist.

Bei dem in Figur 1 gezeigten Ausführungsbeispiel ist gut zu erkennen, dass die Seitenplatten (12) der Käfigsegmente (14) eine leichte Krümmung aufweisen, aber durch das Einschieben von einem Zwischenkeil (15) an einen relativ kleinen Durchmesser angepasst worden sind. Dazu bilden die beiden Verbindungsflächen (151) jedes Zwischenkeils (15) einen spitzen Winkel miteinander. In Figur 1 ist erkennbar, dass die Käfigsegmente (14) über Nuten (111) und Federn (112) miteinander verbunden sind. Auch auf den Verbindungsflächen (151) der Zwischenkeile (15) sind dazu komplementäre Nuten (111) und Federn (112) angeordnet.

Leicht nachvollziehbar ist in Figur 1, dass die Käfigsegmente (14) und die Zwischenkeile (15) jeweils in axialer Richtung zusammengeschoben werden können. Durch die Elastizität des Kunststoffs ist ein gewisses Übermaß der Feder (112) möglich, sodass sie sich in die Nut (111) einpresst und damit einen guten Sitz und eine feste Verbindung gewährleistet.

In **Figur 2** ist ein einzelnes Käfigsegment (14) im Schrägbild gezeichnet. Dunkel ausgelegt ist die Fläche des Käfigsegmentes (14), die zum Innenring (3) hinweist.

Gut zu erkennen sind die beiden Seitenplatten (12), die durch die beiden Stege (11) miteinander verbunden sind. Deutlich wird die erfindungstypische Auslegung der Seitenplatten (12), die in axialer Richtung des Käfigsegmentes erheblich dünner sind als in radialer Richtung. Ebenso wird deutlich, dass die Stirnseiten jeder Seitenplatte (12) durch das Ende des Stegs (11) hindurch weiter verlaufen, so dass sich die nächste daran anschließende Seitenplatte (12) mit ihrer gesamten Stirnfläche darauf abstützen kann. Dadurch können Drehmomente um die Längsachse jedes Käfigsegmentes (14) auf das benachbarte Käfigsegment weitergegeben werden, ohne das sich der Winkel zwischen den beiden Käfigsegmenten wesentlich ändert.

Figur 2 zeigt, dass in die auf den Betrachter zuweisende Seite des Steges (11) eine Nut (111) eingeformt ist. An die Außenfläche des gegenüberliegenden Steges (11), die vom Betrachter wegweist, ist eine Feder (112) angeformt, die in Figur 2 in der Verlängerung der Seitenplatte (12) zu erkennen ist.

### Bezugszeichenliste

- 1: Käfig, zur Führung der Wälzkörper 2
- 11: Steg des Käfigs 1
- 111: Nut, in der Außenseite eines Stegs (11)
- 112: Feder, in der Außenseite eines Stegs (11), komplementär zur Nut 111
- 12: Seitenplatte des Käfigsegmentes 14
- 13: Längsachse des Käfigs 1
- 14: Käfigsegmente, bilden den Käfig 1
- 15: Zwischenkeil zwischen zwei Käfigsegmenten 14
- 151: Verbindungsflächen des Zwischenkeils 15
- 2: Wälzkörper, rollt sich auf Innenring 3 und Außenring 4 ab
- 3: Innenring des Wälzlagers
- 4: Außenring des Wälzlagers

## Patentansprüche

1. Wälzlager mit segmentiertem Käfig (1) zur Führung der Wälzkörper (2), bestehend aus
- einem Innenring (3), auf dem
- mehrere Wälzkörper (2) abrollbar sind, die ebenfalls auf
- einem Außenring (4) abrollbar sind, der zum Innenring (3) konzentrisch ist und
- einem Käfig (1) aus
- mehreren Stegen (11),
- die gleichmäßig über den Umfang verteilt sind und
- die parallel zueinander und zur Längsachse (13) des Käfigs ausgerichtet sind und
- mehreren Seitenplatten (12) zur Verbindung der Stege (11),
wobei
- zwei Stege (11) und zwei Seitenplatten (12) fest miteinander zu einem Käfigsegment (14) verbunden sind, das eine Tasche zur Führung eines Wälzkörpers (2) bildet und
- alle Käfigsegmente (14) paarweise fest miteinander zu einem in sich geschlossenen Käfig (1) verbunden sind und die Käfigsegmente (14) an ihren Stegen (11) miteinander verbunden sind,
**dadurch gekennzeichnet, dass** sich die Stirnseite jeder Seitenplatte (12) mit ihrer gesamten Stirnfläche an der nächsten daran anschließenden Seitenplatte (12) abstützt.

2. Wälzlager nach einem der vorhergehenden Ansprüche, **dadurch gekennzeichnet, dass** die Seitenplatten (12) an ihren Stirnseiten mit der Stirnseite der Seitenplatten (12) des benachbarten Käfigsegmentes (14) verbunden sind.

3. Wälzlager nach einem der vorhergehenden Ansprüche, **dadurch gekennzeichnet, dass** die Käfigsegmente (14) als einstückiges Spritzgussteil oder Druckgussteil oder anderes Gussteil geformt sind.

4. Wälzlager nach einem der vorhergehenden Ansprüche, **dadurch gekennzeichnet, dass** die Käfigsegmente (14) aus Polyamid oder Polyphtalamid oder Polyetherketon (PEK) oder Polyetheretherketon (PEEK) oder Polyamidimid (PAI) oder Polyimid (PI) oder Phenolharz oder einem anderen Kunststoff bestehen.

5. Wälzlager nach Anspruch 4, **dadurch gekennzeichnet, dass** in den Kunststoff
- Glasfasern und/oder
- andere Fasern und/oder
- Glaskugeln und/oder
- andere Füllstoffe
eingebracht sind.

6. Wälzlager nach einem der Ansprüche 1 oder 2, **dadurch gekennzeichnet, dass** die Käfigsegmente (14) aus
- Blech oder
- Messing oder
- Grauguss oder
- einem anderen Stahl oder
einem anderen Metall bestehen.

7. Wälzlager nach Anspruch 6, **dadurch gekennzeichnet, dass** auf wenigstens eine der Flächen, mit der das Käfigsegment (14) den Wälzkörper berührt, Gleitlager aus Kunststoff aufgebracht sind.

8. Wälzlager nach einem der vorhergehenden Ansprüche, **dadurch gekennzeichnet, dass** in die Außenseite des ersten Steges (11) jedes Käfigsegmentes (14) eine Nut (111) eingeformt ist und an der Außenseite des zweiten Steges (11) eine Feder (112) angeformt ist, die zur Nut (111) komplementär ist.

9. Wälzlager nach Anspruch 1, **dadurch gekennzeichnet, dass** das Profil der Nut (111) und der Feder (112) schwalbenschwanzförmig ist.

10. Wälzlager nach einem der vorhergehenden Ansprüche, **dadurch gekennzeichnet, dass** zwischen die Stege benachbarter Käfigsegmente (14) Zwischenkeile (15) eingefügt sind, deren Verbindungsflächen (151) zu den Stegen (11) komplementär zu deren Außenseiten geformt sind.

11. Wälzlager nach Anspruch 9, **dadurch gekennzeichnet, dass** Varianten der Zwischenkeile (15) mit verschiedenen Winkeln zwischen ihren beiden Verbindungsflächen (151) mit jeweils identischen Käfigsegmenten (14) zu Käfigen (1) mit verschiedenen Durchmessern zusammensetzbar sind.

12. Wälzlager nach einem der vorhergehenden Ansprüche, **dadurch**
**gekennzeichnet, dass**
- die Stege (11) und die Seitenplatten (12) eines Käfigsegmentes (14) eine begrenzte Elastizität aufweisen, die es erlaubt, identische Käfigsegmente (14) in verschiedenen Anzahlen zu einem in sich geschlossenen, ringförmigen Käfig (1) fest zu verbinden.

## Claims

1. Roller bearing with a segmented cage (1) for guiding the roller bodies (2), comprising
- an inner ring (3), on which
- a plurality of roller bodies (2) can be rolled, which can also be rolled on
- an outer ring (4), which is concentric with the inner ring (3), and
- a cage (1), which comprises
- a plurality of webs (11),
- which are distributed in a uniform manner about the periphery and
- are aligned so as to be parallel to one another and to the longitudinal axis (13) of the cage, and
- a plurality of lateral plates (12) for connecting the webs (11),
wherein
- two webs (11) and two lateral plates (12) are firmly connected to one another to form a cage segment (14), which forms a pocket for guiding a roller body (2) and
- all cage segments (14) are connected to one another rigidly in pairs to form an inherently closed cage (1) and the cage segments (14) are connected to one another at their webs (11), **characterised in that** the end face of each lateral plate (12) is supported with its entire end face on the next, contiguous lateral plate (12).

2. Roller bearing according to one of the preceding claims,
**characterised in that** the lateral plates (12) are connected at their end faces to the end face of the lateral plates (12) of the adjacent cage segment (14).

3. Roller bearing according to one of the preceding claims,
**characterised in that** the cage segments (14) are formed as a one-part injection moulded part or die cast part or other cast part.

4. Roller bearing according to one of the preceding claims, **characterised in that** the cage segments (14) consist of polyamide or polyphthalamide or polyetherketone (PEK) or polyether ether ketone (PEEK) or polyamide imide (PAI) or polyimide (PI) or phenolic resin or another plastic.

5. Roller bearing according to claim 4, **characterised in that**
- glass fibres and/or
- other fibres and/or
- glass spheres and/or
- other fillers
are incorporated into the plastic

6. Roller bearing according to one of claims 1 or 2, **characterised in that** the cage segments (14) consist of
- sheet metal or
- brass or
- grey cast iron or
- another steel or another metal.

7. Roller bearing according to claim 6, **characterised in that** plastic sliding bearings are mounted on at least one of the surfaces by which the cage segment (14) contacts the roller body.

8. Roller bearing according to one of the preceding claims, **characterised in that** a slot (111) in each case is formed in the outside of the first web (11) of each cage segment (14) and a key (112), which is complementary to said slot (111) is formed on the outer side of the second web (11).

9. Roller bearing according to claim 1, **characterised in that** the profile of the slot (111) and key (112) is dovetail shaped.

10. Roller bearing according to one of the preceding claims, **characterised in that** between the webs of adjacent cage segments (14), intermediate wedges (15) are inserted, of which the connecting surfaces (151) to the webs (11) are formed so as to be complementary to the outer sides thereof.

11. Roller bearing according to claim 9, **characterised in that** variants of the intermediate wedges (15) with different angles between their two connecting surfaces (151) can be assembled with cage segments (14), which are in each case identical, to form cages (1) with different diameters.

12. Roller bearing according to one of the preceding claims,
**characterised in that**
the webs (11) and the lateral plates (12) of a cage segment (14) have a limited elasticity, which permits identical cage segments (14) to be firmly combined in different numbers to form an inherently closed ring-shaped cage (1).

## Revendications

1. Palier à roulement à billes avec une cage segmentée (1) destiné au guidage du corps de roulement (2), consistant en
- une bague intérieure (3) sur laquelle
- plusieurs corps de roulement (2) peuvent être déroulés, qui
- peuvent également être déroulés sur une bague extérieure (4), qui est concentrique par rapport à la bague intérieure (3) et
- une cage (1) constituée de
∘ plusieurs traverses (11)
▪ qui sont réparties sur la circonférence et
▪ qui sont orientées parallèlement les unes par rapport aux autres et par rapport à l'axe longitudinal (13) de la cage et de
- plusieurs plaques latérales (12) destinées à relier les traverses (11), sachant que
- deux traverses (11) et deux plaques latérales (12) sont reliées de façon fixe en un segment de cage (14), qui forme un sac destiné à guider un corps de roulement,
- tous les segments de cage (14) étant reliés par paire fixement les uns avec les autres en une cage fermée (1), les segments de cage (14) étant reliés les uns aux autres sur leurs traverses (11),
**caractérisé par le fait que** la face frontale de chaque plaque latérale (12) s'appuie avec l'ensemble de sa surface frontale sur la plaque latérale (12) suivante rattachée.

2. Palier de roulement selon une des revendications précédentes,
**caractérisé par le fait que** les plaques latérales (12) sont reliées sur leurs faces frontales avec la face frontale des plaques latérales (12) du segment de cage voisin (14).

3. Palier de roulement selon une des revendications précédentes,
**caractérisé par le fait que** les segments de cage (14) sont moulés en tant que pièces unitaires injectées ou fondues sous pression ou fondues de toute autre manière.

4. Palier de roulement selon une des revendications précédentes,
**caractérisé par le fait que** les segments de cage (14) consistent en polyamide, en polyphtalamide, en polyéthercétone (PEK), en polyétheréthercétone (PEEK), en polyamidimide (PAI), en polyimide (PI) ou en résine de phénol ou tout autre plastique.

5. Palier de roulement selon la revendication 4, **caractérisé par le fait que**
- des fibres de verre et/ou
- d'autres fibres et/ou
- des billes de verre et/ou
- d'autres matériaux de remplissage
sont adjoints au plastique.

6. Palier de roulement selon les revendications 1 ou 2, **caractérisé par le fait que** les segments de cage (14) consistent en
- tôle ou
- laiton ou
- fonte grise ou
- un autre acier ou
tout autre métal.

7. Palier de roulement selon la revendication 6, **caractérisé par le fait que** des paliers lisses en plastique sont disposés sur au moins une des surfaces avec laquelle le segment de cage (14) touche le corps de roulement.

8. Palier de roulement selon une des revendications précédentes,
**caractérisé par le fait qu'**une rainure (111) est formée dans la face extérieure de la première traverse (11) de chaque segment de cage (14), et qu'un ressort (112) est formé sur la face extérieure de la deuxième traverse (11), lequel est complémentaire par rapport à la rainure (111).

9. Palier de roulement selon la revendication 1, **caractérisé par le fait que** le profil de la rainure (111) et du ressort (112) ont la forme d'une queue d'aronde.

10. Palier de roulement selon une des revendications précédentes,
**caractérisé par le fait que** des cales intermédiaires (15) sont insérées entre les traverses de segments de cage voisins (14), dont les surfaces de liaison (151) ont des formes complémentaires aux faces extérieures des traverses (11).

11. Palier de roulement selon la revendication 9, **caractérisé par le fait que** des variantes des cales intermédiaires (15) présentant différents angles entre leurs deux surfaces de liaison (151) ayant à chaque fois des segments de cage (14) identiques peuvent être assemblées pour des cages (1) de différents diamètres.

12. Palier de roulement selon une des revendications précédentes,
**caractérisé par le fait que**
- les traverses (11) et les plaques latérales (12) d'un segment de cage (12) présentent une élasticité limitée, qui permet de relier fixement des segments de cage (14) identiques en différents nombres de manière à former une cage (1) fermée sur elle-même en forme d'anneau.
